**Europäisches Patentamt**

**European Patent Office**

**Office européen des brevets**

(19)

(11) Veröffentlichungsnummer: **0 235 578**
**B1**

(12) # EUROPÄISCHE PATENTSCHRIFT

(45) Veröffentlichungstag der Patentschrift:
29.11.89

(51) Int. Cl.⁴: **H02M 5/257, H02M 7/523**

(21) Anmeldenummer: 87101281.1

(22) Anmeldetag: 30.01.87

(54) **Stromversorgungsanlage für mehrere parallel an Sammelschienen einzeln anschliessbare, eine Last bildende Parallelschwingkreise.**

(30) Priorität: 05.03.86 DE 3607125

(43) Veröffentlichungstag der Anmeldung:
09.09.87 Patentblatt 87/37

(45) Bekanntmachung des Hinweises auf die Patenterteilung:
29.11.89 Patentblatt 89/48

(84) Benannte Vertragsstaaten:
AT BE CH DE ES FR GB IT LI

(56) Entgegenhaltungen:
EP-A- 0 197 509
DE-A- 3 220 142

(73) Patentinhaber: AEG-Elotherm GmbH, Hammesberger Strasse 31, D-5630 Remscheid-Hasten(DE)

(72) Erfinder: Matthes, Hans Georg, Lukasstrasse 7, D-5632 Wermelskirchen(DE)

(74) Vertreter: Patentanwaltsbüro Cohausz & Florack, Schumannstrasse 97, D-4000 Düsseldorf 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Stromversorgungsanlage für mehrere parallel an Sammelschienen anschließbare, eine Last bildende Parallelschwingkreise, insbesondere mit jeweils einem Induktor zum induktiven Erwärmen von Werkstücken, mit mehreren in Abhängigkeit von der Leistungsaufnahme der Last Wechselstrom in die Sammelschienen einspeisenden, zu- und abschaltbaren Stormrichtern, wie z.B. in der DE-A 3 220 142 beschrieben.

Es ist bekannt, mit rotierenden Umformern gleicher elektrischer Kenndaten Wechselstrom in Sammelschienen einzuspeisen, an die über Schalter und Spannungsanpaßglieder einzelne Verbraucher, z.B. jeweils ein Induktor zum Erwärmen von Werkstücken aufweisende Parallelschwingkreise anschließbar sind. In Abhängigkeit von der von den Verbrauchern insgesamt benötigten Leistung lassen sich die einzelnen rotierenden Umformer zu- bzw. abschalten, z.B. durch Erregen oder Entregen.

Eine solche Stromversorgungsanlage hat eine Reihe von Nachteilen. Wegen der großen Masse der rotierenden Teile eines rotierenden Umformers läßt man die Umformer auch dann rotieren, wenn ihnen keine Leistung abverlangt wird. Dabei entstehen erhebliche Verluste in der Größenordnung von 5% der Nennleistung. Der Betrieb von rotierenden Umformern im Teillastbereich ist wegen des schlechten Wirkungsgrades unterhalb der Nennleistung ungünstig. Einer schlagartigen Belastungsänderung durch das Zu- und Abschalten von Verbrauchern kann durch Zu- und Abschalten einzelner Unformer nicht schnell genug gefolgt werden. Das bedeutet, daß bei häufigen Belastungsänderungen die Stromversorgungsanlage über nicht unbeachtlich lange Zeitphasen mit ungünstigem Wirkungsgrad betrieben wird. Ein weiterer wesentlicher Mangel rotierender Umformer besteht in dem Wartungs- und Reparaturaufwand.

Ferner ist eine Anordnung zum Parallelbetrieb von Gleichrichtern in Form von gittergesteuerten Dampf- oder Gasentladungsstrecken mit Strombegrenzungswiderständen vor jedem Steuergitter bekannt, die die Last je nach Bedarf auf einen beliebigen Teil der jeweils im Ganzen für Parallelbetrieb vorgesehenen Gleichrichter verteilt, indem die einzelnen Gleichrichter beliebig zu- oder abgeschaltet werden. Bei diesem Stand der Technik wird die Last also mit Gleichstrom versorgt und nicht, wie in gattungsbildenden Gegenstand mit Wechselstrom. Deshalb eignet sich eine solche Anlage nicht zum induktiven Erwärmen von Werkstücken.

Der Erfindung liegt die Aufgabe zugrunde, eine Stormversorgungsanlage zu schaffen, die mit höherem Wirkungsgrad arbeitet, eine praktisch verzögerungsfreie Anpassung der Stromrichter an die abverlangte Leistung bei schlagartigem Zu- und Abschalten von Verbrauchern ermöglicht und die schließlich weitgehend wartungsfrei ist.

Diese Aufgabe wird erfindungsgemäß mit einer Stromversorgungsanlage der eingangs genannten Art dadurch gelöst, daß die Stromrichter statische Parallelschwingkreisumrichter sind, die einen gemeinsamen Hilfs-Parallelschwingkreis haben und deren Wechselrichter durch gemeinsame Ansteuerung der Stromventile in den einander entsprechenden Diagonalen mit Kommutierungssignalen synchronisiert sind, und daß die Phasenanschnittsteuerung an den Stromventilen der Gleichrichter der verschiedenen Umrichter in Abhängigkeit von der von der Last geforderten Leistung derart erfolgt, daß möglichst viele Gleichrichter mit Vollast und möglichst wenige mit Teillast arbeiten.

Bei der erfindungsgemäßen Stromversorgungsanlage werden während der Stromversorgung einer Last durch einen oder mehrere Umrichter die übrigen Umrichter im Bereitschaftszustand dadurch gehalten, daß auch die Stromventile der Wechselrichter, die im Augenblick keinen Strom an die Last liefern, mit Kommutierungssignalen versorgt werden, wobei die für die Kommutierung notwendige Blindleistung von dem gemeinsamen Hilfs-Parallelschwingkreis zur Verfügung gestellt wird. Das bedeutet, daß bei einer schlagartigen Belastungsänderung der in diesem Augenblick nicht an der Stromversorgung der Last beteiligte Umrichter praktisch verzögerungsfrei an der Stromlieferung beteiligt werden kann, indem die Phasenanschnittsteuerung die Stromventile des Gleichrichters entsprechend weit öffnet. Zwar wird bei statischen Umrichtern im Gegensatz zu rotierenden Umformern auch schon weit unterhalb der Nennleistung ein guter Wirkungsgrad erzielt, doch würde ein gleichzeitiger Teillastbetrieb mehrerer Umrichter wegen des Anschnittes der Phasen am Gleichrichter unnötigerweise Rückwirkungen auf des Netz durch Oberwellen und einen schlechten Kosinus $\Phi$ zur Folge haben. Durch die erfindungsgemäße Ausbildung der Phasenanschnittsteuerung, daß möglichst viele Gleichrichter mit Vollast und möglichst wenige mit Teillast betrieben wrden, ist gewährleistet, daß die Rückwirkungen auf das Netz infolge von Oberwellen und der Kosinus $\Phi$ bei der jeweiligen Last optimal ist. Diese Verhältnisse können weiter dadurch verbessert werden, daß Umrichter unterschiedlicher Leistung vorgesehen sind und eine Auswahleinrichtung entsprechend dem Leistungsbedarf die Umrichter auswählt, so daß der Teillastbetrieb auf ein Minimum reduziert ist.

Durch Rückwirkung der Lastschwingkreise auf den Hilfs-Schwingkreise können Änderungen der Eigenfrequenz entstehen, die je nach Kompensationszustand "Ohmsch-kapazitiv" oder "Ohmsch-induktiv" sind. Durch geeignetes Zu- und Abschalten von Kondensatoren im Lastschwingkreis kann eine solche Frequenzveränderung weitgehand kompensiert werden.

Das Zuschalten von Lastschwingkreisen kann zu Kommutierungsstörungen der Wechselrichter führen, da der Kondensator des Lastschwingkreises bei Zuschalten für den Wechselrichterausgang einen Kurzschluß darstellt. Zu solchen Kommutierungsstörungen kommt es jedoch dann nicht, wenn beim Zuschalten besondere Vorkehrungen getroffen werden. Aus der DE-PS 32 20 142 sind zwar geeignete Maßnahmen dafür bekannt, doch ist für die erfindungsgemäße Stromversorgung es wesentlich vorteilhafter, wenn jeder der zu- und abschaltbaren Kondensatoren bzw. Lastschwingkreisen bei geöffnetem ersten Schalter für das Zu- und Abschalten über einen zweiten, in zeitlicher Abhängigkeit von den Kommutierungssignalen der Wechselrichter gesteuerten Schalter an einen Reiheschwingkreis mit einem fremdgeladenen Kondensator anschließbar ist, derart, daß elektrische Energie von dem Reiheschwingkreis in einem Einschwingvorgang auf den zusätzlichen Kondensator bzw. einen der Parallelschwingkreise übertragen und bei gegenüber dem Anfang der Energieübertragung zeitverzögertem Zuschalten des Kondensators bzw. des Parallelschwingkreises durch den ersten Schalter, dessen Spannung mit der Spannung an dem bzw. den bereits an Wechselrichtern angeschlossenen Parallelschwingkreis bzw. Schwingkreisen und Kondensator bzw. Kondensatoren mindestens annähernd übereinstimmt, d.h. die über dem ersten Schalter liegende Spannung kurz vor dessen Zuschalten annähernd Null ist.

Bei dieser Ausgestaltung nach der DE-OS 35 12 491 läßt sich sehr schnell (Stromresonanz) aus dem Kondensator des Reihenschwingkreises elektrische Energie in den Kondensator des Parallelschwingkreises übertragen, so daß bei anschließendem Zuschalten des so mit Energie versorgten Kondensators praktisch kein Ladungsausgleich mehr zwischen den einzelnen Kondensatoren nötig ist. Die Gefahr von Fehlstarts bei der Unkommutierung besteht deshalb nicht mehr. Auch fallen keine Fehlzeiten mehr beim Zuschalten der einzelnen Schwingkreise an.

Im folgenden wird die Erfindung anhand einer ein Ausführungsbeispiel darstellenden Zeichnung näher erläutert.

Mehrere statische Umrichter, die jeweils aus einem Gleichrichter $G_1, G_2, G_3$, einer Zwischenkreisdrossel $D_1, D_2, D_3$ und einem Wechselrichter $W_1, W_2, W_3$ bestehen, sind parallel an Sammelschienen Sch zum Zwecke der Stromeinspeisung angeschlossen. Jeder Gleichrichter $G_1, G_2, G_3$ besteht aus einer am Drehstromnetz angeschlossenen, thyristorisierten Brückenschaltung. Jeder Wechselrichter $W_1, W_2, W_3$ besteht aus einer thyristorisierten Brückenschaltung, die über die Sammelschienen Sch auf einen gemeinsamen Hilfs-Parallelschwingkreis $PS_H$ arbeiten.

Die Thyristoren der Gleichrichter $G_1$ werden von einer Phasenanschnittsteuerung A angesteuert. Die Ansteuerung erfolgt in Abhängigkeit von der vom Verbraucher geforderten Leistung in der Weise, daß zunächst nur ein Gleichrichter die Stromversorgung übernimmt. Erst wenn dieer Gleichrichter voll ausgesteuert ist, und noch mehr Leistung vom Verbraucher gefordert wird, wird der nächste Gleichrichter zugeschaltet. Zur Überwachung der jeweiligen Strombelastung eines Umrichters ist am Ausgang eines jeden Wechselrichters $W_1, W_2, W_3$ ein Meßgerät $M_1, M_2, M_3$ vorgesehen, das entsprechende Meßwerte an die Phasenanschnittsteuerung A liefert. Die Phasenanschnittsteuerung A ist darüber hinaus in der Lage, bei Umrichtern mit untershiedlicher Leistung die Umrichter auszuwählen, die bei der von der Last abverlangten Leistung weitestgehend mit Nennleistung betrieben werden können.

Die an den Sammelschienen Sch anliegende Last wird von Parallelschwingkreisen $C_0, L_0, C_1, L_1$ und $C_2, L_2$ gebildet, deren Induktivitäten $L_0, L_1$ und $L_2$ zum Zwecke der Induktionserwärmung eines nicht dargestellten Werkstückes als Induktoren ausgebildet sind. Sie liegen über Anpassungsübertrager $Ü_1, Ü_2, Ü_3$ parallel an den Sammelschienen Sch und damit auch an den Wechselrichtern $W_1, W_2, W_3$. Mittels steuerbarer Schalter $S_0, S_1, S_2$ sind sie einzeln an die Sammelschienen Sch anschaltbar bzw. von ihr abschaltbar. Die Ansteuerung dieser Schalter $S_0, S_1$ und $S_2$ erfolgt mittels einer noch im einzelnen zu beschreibenden Steuereinrichtung in Abhängigkeit von der Temperatur des Werkstückes

Die Steuereinrichtung umfaßt ein Vergleichs- und Entscheidungsglied V/E, dem einmal die Temperaturen $T_0, T_1, T_2$ des Werkstückes an den Induktoren $L_0, L_1, L_2$ als Ist-Werte und entsprechende Vergleichswerte zugeführt werden. In Abhängigkeit von der Soll-Ist-Wertabweichung gibt das Vergleichs- und Entscheidungsglied V/E Steuersignale an einen ersten Wahlschalter WS1 und einen zweiten Wahlschalter WS2. Über den Wahlschalter WS1 gelangen gleichzeitig an beide Zündelektroden der die Schalter $S_0, S_1, S_2$ bildenden antiparallelgeschalteten Thyristoren des jeweils ausgewählten Schalters $S_0, S_1, S_2$ Zündimpulse, die von den den in den entsprechenden Diagonalen der Wechselrichter $W_1, W_2, W_3$ gemeinsam von der Löschzeit-Regeleinrichtung LR zugeführten Kommutierungsimpulsen abgeleitet sind. Dabei erhalten beide Thyristoren des ausgewählten Schalters $S_0, S_1$ oder $S_2$ sowohl bei der Ansteuerung der einen als auch der anderen Diagonalen des Wechselrichters W Zündimpulse.

In Abhängigkeit von der Ansteuerung des Vergleichs- und Entscheidungsgliedes V/E gelangen Zündimpulsen, die von den einer Diagonalen des Wechselrichters W von der Löschzeit-Regeleinrichtung LR zugeführten Impulse abgeleitet sind, an die Zündelektrode eines Thyristorschalters $T_{L0}, T_{L1}, T_{L2}$. Über diese Schalter $T_{L0}, T_{L1}, T_{L2}$ ist ein Reihenschwingkreis $C_L, L_L$ an jeweils einen der Einzelschwingkreise $C_0, L_0; C_1, L_1; C_2, L_2$ anschließbar. Der Kondensator $C_L$ dieses Reihenschwingkreises ist fremdgeladen. Die Eigenfrequenz des Reihenschwingkreises $C_L, L_L$ ist auf die Eigenfrequenz der Einzelschwingkreise $C_0, L_0; C_1, L_1; C_2, L_2$ abgestimmt, so daß nach Anschluß des Reihenschwingkreises an einen nicht im Betrieb befindlichen Parallelschwingkreis die Entladung sich in Form eines Einschwingvorganges etwa mit einer Eigenfrequenz vollzieht, die gleich der Eigenfrequenz des Einzelschwingkreises ist.

Das Vergleichs- unt Entscheidungsglied V/E liefert an ein UND-Glied & einen Steuerimpuls, wenn ein weiterer Parallelschwingkreis abgeschaltet bzw. zugeschaltet werden soll. Das UND-Glied & liefert ein Ausgangssignal, sobald es von der Löschzeit-Regeleinrichtung LR einen Zündimpuls empfängt. Das Ausgangssignal steuert einen Impulsgeber I an, der entsprechend der Stellung des Wahlschalters WS2 Zündimpulse an die Schalter $T_{L0}, T_{L1}, T_{L2}$ liefert. Das Ausgangssignal des UND-Gliedes & gelangt außerdem über ein Verögerungsglied V an den Wahlschalter WS1. Das Verzögerungsglied V sorgt dafür, daß über den Wahlschalter WS1 die zum Starten eines Einzelschwingkreises $S_0, S_1, S_2$ benötigten Zündimpulse erst geliefert werden, wenn der zuschaltende Einzelschwingkreis vom Parallelschwingkreis $C_1, L_1$ geladen worden ist, das ist etwa nach einer halben Periode.

Danach ist das Verzögerungsglied V nicht mehr wirksam, so daß die Zündimpulse der Löschzeit-Regeleinrichtung LR für beide Diagonalen synchron an die antiparallelen Thyristoren der Schalter $S_0, S_1, S_2$ gelangen.

Um Rückwirkungen der Last-Schwingkreise auf den Hilfs-Schwingkreis, die Änderungen der Eigenfrequenz zur Folge haben, auszuschließen, kann durch Zu- oder Abschalten von parallelen Kapazitäten $C_{01}, C_{11}$ und $C_{21}$ je nach Komensationszustand "Ohmsch-kapazitiv" oder "Ohmsch-induktiv" kompensiert werden.

Bei der erfindungsgemäßen Stromversorgungsanlage erfolgt der Start der Umrichter in herkömmlicher Weise mit den bekannten, hier nicht dargestellten Starteinrichtungen. Es ist lediglich der Start eines Umrichters erforderlich, da über den gemeinsamen Hilfsparallel-Schwingkreis für die Wechselrichter der anderen Umrichter die Blindleistung zur Verfügung gestellt wird. Da jeder andere Umrichter durch die gemeinsame Ansteuerung mit den Kommutierungsimpulsen in Bereitschaftsstellung gehalten wird, kann auch jeder andere Umrichter mittels der Phasenanschnittsteuerung unverzüglich zur Lieferung von Strom an die Sammelschiene zugeschaltet werden. Um eine zusätzliche Last an die Sammelschiene anzuschließen, bedarf es nicht der Abschaltung der Umrichter. Wegen der Energieübertragung von dem fremdgeladenen Kondensator auf den Kondensator des zuzuschaltenden Schwingkreises ergeben sich keine Rückwirkungen auf die Umrichter, die Schwierigkeiten der Umkommutierung verursachen können.

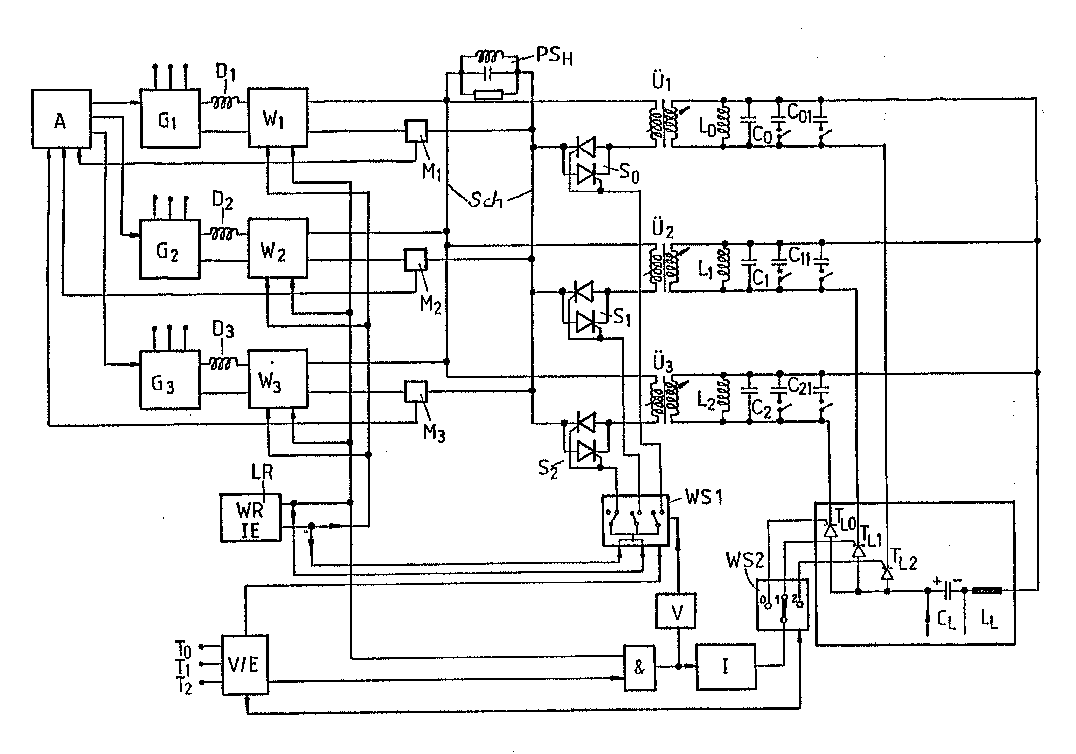

## Patentansprüche

Stromversorgungsanlage für mehrere parallel an Sammelschienen anschließbare, eine Last bildende Parallelschwingkreise $(L_0, C_0; L_1, C_1; L_2, C_2)$, insbesondere mit jeweils einem Induktor $(L_0, L_1, L_2)$ zum induktiven Erwärmen von Werkstücken, mit mehreren in Abhängigkeit von der Leistungsaufnahme der Last Wechselstrom in die Sammelschienen einspeisenden, zu- und abschaltbaren Stromrichtern, **dadurch gekennzeichnet,** daß die Stromrichter $(G_1, W_1; G_2, W_2; G_3, W_3)$ statische Parallelschwingkreisumrichter sind, die einen gemeinsamen Hilfs-Parallelschwingkreis $(PS_H)$ haben und deren Wechselrichter $(W_1, W_2, W_3)$ durch gemeinsame Ansteuerung der Stromventile in den einander entsprechenden Diagonalen mit Kommutierungssignalen synchronisiert sind, und daß eine Phasenanschnittsteuerung (A) an den Stromventilen der Gleichrichter $(G_1, G_2, G_3)$ der verschiedenen Umrichter $(G_1, W_1; G_2, W_2; G_3 W_3)$ in Abhängigkeit von der von den Last-Parallelschwingkreisen $(L_0, C_0; L_1, C_1; L_2, C_2)$ geforderten Leistung derart erfolgt, daß möglichst viele Gleichrichter $(G_1, G_2, G_3)$ mit Vollast und möglichst wenige mit Teillast arbeiten.

2. Stromversorgungsanlage nach Anspruch 1, **dadurch gekennzeichnet,** daß den Last-Parallelschwingkreisen $(L_0, C_0; L_1, C_1; L_2, C_2)$ zuschaltbare Kondensatoren $(C_{01}, C_{11}, C_{21})$ parallel geschaltet sind.

3. Stromversorgungsanlage nach Anspruch 1 oder 2, **dadurch gekennzeichnet,** daß jeder zu- und abschaltbare Kondensator bzw. Last-Parallelschwingkreis $(L_0, C_0; L_1, C_1; L_2, C_2)$ bei geöffnetem ersten Schalter $(S_0, S_1, S_2)$ für das Zu- and Abschalten über einen zweiten, in zeitlicher Abhängigkeit von den Kommutierungssignalen der Wechselrichter $(W_1, W_2, W_3)$ gesteuerten Schalter $(T_{L0}, T_{L1}, T_{L2})$ an einen Reihenschwingkreis $(C_L, L_L)$ mit einem fremdgeladenen Kondensator $(C_L)$ anschließbar ist, derart, daß elektrische Energie von dem Reihenschwingkreis $(C_L, L_L)$ in einem Einschwingvorgang auf den zusätzlichen Kondensator bzw. einen der Last-Parallelschwingkreise $(L_0, C_0; L_1, C_1; L_2, C_2)$ übertragen und bei gegenüber dem Anfang der Energieübertragung zeitverzögertem Zuschalten des Kondensators bzw. des Parallelschwingkreises $(L_0, C_0; L_1, C_1; L_2, C_2)$ durch den ersten Schalter $(S_0, S_1, S_2)$, dessen Spannung mit der Spannung an dem bzw. den bereits an den Wechselrichtern angeschlossenen Last-Parallelschwingkreis bzw. Schwingkreisen und Kondensator bzw. Kondensatoren mindestens annähernd übereinstimmt, d.h. die über dem ersten Schalter $(S_0, S_1, S_2)$ liegende Spannung kurz vor dessen Zuschalten annähernd Null ist.

## Revendications

1. Installation d'alimentation en courant pour plusieurs circuits oscillants parallèles $(L_0, C_0, L_1, C_1, L_2, C_2)$ formant une résistance de charge et pouvant être reliés en parallèle à des barres collectrices, en particulier avec respectivement un inducteur $(L_0, L_1, L_2)$ pour le chauffage inductif de pièces de travail, avec plusieurs convertisseurs pouvant être mis en et hors circuit, alimentant du courant alternatif dans les barres collectrices en dépendance de la puissance absorbée par la résistance de charge, caractérisée en ce que les convertisseurs $(G_1, W_1; G_2, W_2; G_3, W_3)$ sont des changeurs de fréquence à circuits oscillants parallèles qui ont un circuit oscillant parallèle auxiliaire $(PS_H)$ commun, et dont les onduleurs $(W_1, W_2, W_3)$ sont synchronisés avec des signaux de commutation par excitation commune des valves de courant dans les diagnonales se correspondant l'une à l'autre, et qu'une commande par déphasage (A) se produit aux valves de courant des redresseurs $(G_1, G_2, G_3)$ des différents changeurs de fréquence $(G_1, W_1; G_2, W_2; G_3, W_3)$ en dépendance de la puissance demandée par les circuits oscillants parallè-

les de charge ($L_0$, $C_0$; $L_1$, $C_1$; $L_2$, $C_2$) de telle maniè-re que le plus possible de redresseurs ($G_1$, $G_2$, $G_3$) travaillent à pleine charge et le moins possible à charge partielle.

2. Installation d'alimentation en courant selon la revendication 1, caractérisée en ce que des con-densateurs ($C_{01}$, $C_{11}$, $C_{21}$) pouvant être raccordés sont montés en parallèle aux circuits oscillants pa-rallèles de charge ($L_0$, $C_0$; $L_1$, $C_1$; $L_2$, $C_2$).

3. Installation d'alimentation en courant selon la revendication 1 ou 2, caractérisée en ce que chaque condensateur pouvant être mis en ou hors circuit ou circuit oscillant parallèle de charge ($L_0$, $C_0$; $L_1$, $C_1$; $L_2$, $C_2$) peut être raccordé, le premier inter-rupteur ($S_0$, $S_1$, $S_2$) étant ouvert, à un circuit oscillant série ($C_L$, $L_L$) avec un condensateur ($C_L$) chargé séparément, pour la mise en et hors circuit, par l'intermédiaire d'un deuxième interrupteur ($T_{L0}$, $T_{L1}$, $T_{L2}$) commandé en dépendance dans le temps des signaux de commutation des onduleurs ($W_1$, $W_2$, $W_3$), de telle manière que de l'énergie électrique est transférée du circuit oscillant série ($C_L$,$L_L$) selon un phénomène transitoire, sur le condensateur additionnel ou l'un des circuits oscillants parallèles de charge ($L_0$, $C_0$; $L_1$, $C_1$; $L_2$, $C_2$) et, lors de la mise en circuit du condensateur ou du circuit oscillant paral-lèle ($L_0$, $C_0$; $L_1$, $C_1$; $L_2$, $C_2$), décalée dans le temps par rapport au début de la transmission d'énergie, par le premier interrupteur ($S_0$, $S_1$, $S_2$), dont la ten-sion concorde au moins approximativement à la tension au circuit oscillant parallèle de charge ou aux circuits oscillants et condensateurs ou condensateurs déjà raccordés aux onduleurs, c'est-à-dire que la tension se trouvant au premier interrupteur ($S_0$, $S_1$, $S_2$) est voisine de zéro peu de temps avant sa mise en circuit.

**Claims**

1. Power supply system for a plurality of parallel resonant circuits ($L_0$, $C_0$; $L_1$, $C_1$; $L_2$, $C_2$) connecta-ble in parallel to bus bars and forming a load, in particular having a respective inductor ($L_0$, $L_1$, $L_2$) for the inductive heating of workpieces, having a plurality of current converters which can be switched on and off and which supply alternating current to the bus bars in dependence on the power consumption of the load, characterized in that the current converters ($G_1$, $W_1$; $G_2$, $W_2$; $G_3$, $W_3$) are static par-allel resonant circuit converters which have a common auxiliary parallel resonant circuit ($PS_H$) and whereof the current inverters ($W_1$, $W_2$, $W_3$) are synchronized by common triggering of the current switches in the mutually corresponding diagonals by means of commutation signals, and in that a phase control system (A) controls the current switches of the rectifiers ($G_1$, $G_2$, $G_3$) of the various convert-ers ($G_1$, $W_1$; $G_2$, $W_2$; $G_3$, $W_3$) in dependence on the power required by the load parallel resonant cir-cuits ($L_0$,$C_0$; $L_1$, $C_1$; $L_2$, $C_2$) such that as many recti-fiers ($G_1$, $G_2$, $G_3$) as possible operate at full load and as few as possible operate at partial load.

2. Power supply system according to claim 1, characterized in that switchable capacitors ($C_{01}$, $C_{11}$, $C_{21}$) are connected in parallel to the load paral-lel resonant circuits ($L_0$, $C_0$; $L_1$, $C_1$; $L_2$, $C_2$).

3. Power supply system according to Claim 1 or 2, characterized in that each capacitor which can be switched on and off or load parallel resonant circuit ($L_0$, $C_0$, $L_1$, $C_1$; $L_2$, $C_2$) is connectable, when the first switch ($S_0$, $S_1$, $S_2$) is opened for switching on and off via a second switch ($T_{L0}$, $T_{L1}$, $T_{L2}$) controlled in dependence on time by the commutation signals of the current inverters ($W_1$, $W_2$, $W_3$), to a series res-onant circuit ($C_L$, $L_L$) having an externally charged capacitor ($C_L$) such that electrical energy is transferred in a transient effect from the series resonant circuit ($C_L$, $L_L$) to the additional capacitor or to one of the load parallel resonant circuits ($L_0$, $C_0$; $L_1$, $C_1$; $L_2$, $C_2$) and, the capacitor or the parallel res-onant circuit ($L_0$, $C_0$; $L_1$, $C_1$; $L_2$, $C_2$) being switched on in delayed manner with respect to the start of energy transfer by the first switch ($S_0$, $S_1$, $S_2$), the voltage thereof agrees at least approximately with the voltage across the load parallel resonant circuit or circuits and capacitor or capacitors already connected to the current inverters, that is to say the voltage through the first switch ($S_0$, $S_1$, $S_2$) is ap-proximately zero shortly before the latter is switched on.